# EUROPÄISCHE PATENTSCHRIFT

(11) **EP 2 892 690 B1**
(45) Veröffentlichungstag und Bekanntmachung des Hinweises auf die Patenterteilung: **14.12.2016**
(21) Anmeldenummer: 12758467.0
(22) Anmeldetag: 10.09.2012
(51) Int. Cl.: B24C 1/06, B24C 11/00, C09G 1/00

(54) **VERFAHREN UND STRAHLMITTEL ZUR HERSTELLUNG EINER SATINIERTEN OBERFLÄCHE AUF EINEM ALUMINIUMSUBSTRAT**
METHOD AND BLASTING MEANS FOR PRODUCING A SATINIZED FINISH ON AN ALUMINIUM SUBSTRATE
PROCÉDÉ ET GRENAILLE POUR PRODUIRE UNE SURFACE SATINÉE SUR UN SUBSTRAT D'ALUMINIUM

(43) Veröffentlichungstag der Anmeldung: 15.07.2015
(73) Patentinhaber: Vulkan Inox GmbH, 45525 Hattingen (DE)
(72) Erfinder: BRODALLA, Dieter, 40597 Düsseldorf (DE)
(74) Vertreter: Michalski Hüttermann & Partner Patentanwälte mbB
(86) Internationale Anmeldenummer: PCT/EP2012/067666
(87) Internationale Veröffentlichungsnummer: WO 2014/037059

(56) Entgegenhaltungen:
- EP-A1- 1 967 613
- EP-A2- 0 213 371
- US-A- 6 036 785

## Beschreibung

Die vorliegende Erfindung betrifft ein Verfahren sowie ein Strahlmittel zur Herstellung einer satinierten Oberfläche auf einem Aluminiumsubstrat (siehe z.B. EP-A-1 967 613).

Eloxierte Aluminiumbauteile finden heutzutage in vielen Bereichen Anwendung, in denen einerseits der dekorative "Aluminiumlook" erhalten bleiben soll und andererseits ein Korrosionsschutz der empfindlichen Aluminiumoberflächen erforderlich ist. Beispielhaft zu nennende Bereiche sind der Fenster- oder Fassadenbau, oder auch der Automotive-Bereich sowie Haushaltsgeräte.

Vor dem Eloxieren werden die Aluminiumteile meistens gebeizt, um die Aluminiumoberflächen von Verunreinigungen zu befreien und die natürlich vorhandene Oxidschicht (Passivschicht) zu entfernen. Je nach Behandlungsart werden dabei seidenmatte bis matt glänzende Oberflächen, die Aufgrund ihres Aussehens als sogenannte "satinierte" Oberflächen bezeichnet werden, geschaffen.

Zum Erreichen eines verbesserten Korrosionsschutzes, als auch aus Designgründen werden die Aluminiumbauteile eloxiert, d.h. es wird mittels Elektrolyse eine Oxidschicht initiiert. Dieses Verfahren wird auch als Anodisierung bezeichnet, wobei Aluminium elektrolytisch oxidiert wird. Die so behandelten Aluminiumoberflächen können auch vor einer abschließenden Verdichtung eingefärbt werden.

Die durch das Eloxieren von Aluminium und Aluminiumlegierungen erzeugten Oxidschichten sind den auf den Aluminiumoberflächen natürlichen auftretenden Oxidschichten hinsichtlich der mechanischen Eigenschaften, der Korrosionsbeständigkeit und dem dekorativen Aussehen weit überlegen. Gute Korrosionsbeständigkeit gegenüber Industrie- und Seeatmosphäre werden bei Oxidschichten von 20 µm erreicht. Die erzeugte Oxidschicht ist elektrisch nicht leitend.

Um homogene Oxidschichten gestalten zu können, gehen dem Eloxieren mechanische oder chemische Vorbehandlungsverfahren voraus. Diese sind beispielsweise in der DIN 17611 niedergelegt. Tabelle 1 zeigt das Bezeichnungssystem für die Vorbehandlung von Aluminiumoberflächen gemäß der genannten DIN 17611.

**Tabelle 1**

| Symbol | Art der Vorbehandlung | Anmerkungen |
|---|---|---|
| E0 | Entfetten und Desoxidieren | Oberflächenbehandlung vor dem Anodisieren, bei dem die Oberfläche ohne weitere Vorbehandlung entfettet und desoxidiert wird. Mechanische Oberflächenfehler, z. B. Eindrücke und Kratzer, bleiben sichtbar. Korrosionsstellen, die vor der Behandlung kaum wahrgenommen werden konnten, können nach der Behandlung sichtbar werden. |
| E1 | Schleifen | Schleifen führt zu einem vergleichsweise einheitlichen, aber etwas stumpfmatten Aussehen. Alle vorhandenen Oberflächenfehler werden weitgehend beseitigt, aber Schleifriefen können sichtbar bleiben. |
| E2 | Bürsten | Mechanisches Bürsten bewirkt eine einheitliche glänzende Oberfläche mit sichtbaren Bürstenstrichen. Oberflächenfehler werden nur teilweise entfernt. |
| E3 | Polieren | Mechanisches Polieren führt zu einer glänzenden, blanken Oberfläche, während Oberflächenfehler nur teilweise beseitigt werden. |
| E4 | Schleifen und Bürsten | Durch Schleifen und Bürsten wird eine einheitlich glänzende Oberfläche erreicht; mechanische Oberflächenfehler werden beseitigt. Korrosionsstellen, die bei den Behandlungen E0 oder E6 sichtbar werden können, werden beseitigt. |
| E5 | Schleifen und Polieren | Durch Schleifen und Polieren wird ein glattes, glänzendes Erscheinungsbild erreicht; mechanische Oberflächenfehler werden beseitigt. Korrosionswirkungen, die bei den Behandlungen E0 oder E6 sichtbar werden können, werden beseitigt. |
| E6 | Beizen | Nach dem Entfetten erhält die Oberfläche einen seidenmatten oder matten Glanz, indem sie mit speziellen alkalischen Beizlösungen behandelt wird. Mechanische Oberflächenfehler werden ausgeglichen, jedoch nicht vollständig beseitigt. Korrosionseinwirkungen auf der Metalberfläche können beim Beizen sichtbar werden. Eine mechanische Vorbehandlung vor dem Beizen kann diese Wirkungen beseitigen; es ist jedoch günstiger, das Metall so zu behandeln und zu lagern, dass Korrosion vermieden wird. |
| E7 | Chemisches oder elektrochemisches | Nach dem Entfetten der Oberfläche in einem Dampfentfettungsmittel oder in einem nicht ätzenden |
| | Glänzen | Reinigungsmittel wird die Oberfläche durch eine Behandlung in speziellen chemischen oder elektrochemischen Glanzbädern hochglänzend. Oberflächenfehler werden nur im begrenzten Umfang beseitigt und Korrosionseinwirkungen können sichtbar werden. |
| E8 | Polieren und chemisches oder elektrochemisches Glänzen | Schleifen und Polieren mit nachfolgendem ehemischen oder elektrochemischem Glänzen. Diese Behandlung führt zu einem hochglänzenden Erscheinungsbild; mechanische Oberflächenfehler und beginnende Korrosion werden im Allgemeinen beseitigt. |

Die mechanischen, chemischen und/oder elektrochemischen Vorbehandlungen dienen dazu, die Oberfläche der Aluminiumsubstrate für die anodische Oxidation vorzubereiten. Hierdurch können bestimmte Oberflächeneffekte erzielt werden. Sie dienen zum Reinigen der Bauteiloberflächen, zum Entfernen von Oxidschichten (Passivschicht oder fehlerhaft eloxierter Oberflächen) und von Oberflächendefekten. Hierdurch wird ein gleichmäßiges Aussehen der Oberfläche erreicht und durch erhaltene blanke Aluminiumfläche ein reger Ionenaustausch während der Elektrolyse ermöglicht. Darüber hinaus werden bestimmte gewünschte als auch ungewünschte Strukturen geschaffen, wie beispielsweise Schleif- und Bürstspuren.

Eines der häufig eingesetzten chemischen Behandlungsverfahren ist das Beizen der Aluminiumsubstratoberflächen, was auch als E6 Behandlung bekannt ist. Dabei werden gleichmäßig matte und dekorative Oberflächen geschaffen; das sogenannte E6-Finish. Die durch das Extrudieren von Profilen und das Walzen von Blechen entstandenen Unregelmäßigkeiten auf der Oberfläche sollen überdeckt bzw. entfernt werden. Auch technologisch bedingte Gefügeunregelmäßigkeiten, wie Stegabzeichnungen und Schweißnähte sollen möglichst weitgehend so mattiert werden, dass sie dekorativ nicht störend sind.

Aufgrund der amphoteren Eigenschaften der Aluminiumoberflächen kann sowohl durch Einsatz von Basen, als auch durch Einsatz von Säuren die Bauteiloberfläche gebeizt werden. Hierdurch wird die natürlich vorhandene Oxidschicht auf der Aluminiumoberfläche entfernt und eventuelle Defekte aus dem Herstellungsprozess in der Oberfläche werden abgemildert. Infolgedessen wird eine blanke Aluminiumoberfläche erhalten. Dies ermöglicht den für die anschließende elektrolytische Behandlung notwendigen sehr guten Ionenaustausch.

In den überwiegenden Fällen werden die zu behandelnden Aluminiumsubstrate in ein Tauchbad mit einer wässrigen Lösung aus Natriumhydroxid (NaOH) eingesetzt. Aufgrund seiner chemischen Eigenschaften dient die Natriumhydroxid-Lösung sowohl zum Entfernen von Verunreinigungen wie Fetten und Ölen, als auch zum Beizen der Aluminiumoberflächen. Vielfach erfolgen jedoch Reinigung und Beizen getrennt, da zur Reinigung eine deutlich geringere NaOH-Konzentration ausreicht und somit beispielsweise weniger NaOH in das anschließende Spülbecken verschleppt wird. Das reinigende Verfahren wird gemäß DIN17611 als E0 bezeichnet. Abhängig vom Gehalt evtl. Legierungsbestandteile des Substrates oder den zu erzielenden Effekt können aber auch weitere Natriumverbindungen wie Silikate, Karbonate oder Phosphate zum Einsatz kommen.

Natriumhydroxid bewirkt einen sehr starken Angriff auf die Oxide, Oxidhydrate und das Grundmetall des Aluminiumsubstrates der etwa 20mal größer als bei vergleichbaren Säurekonzentrationen ist. Für einen optimalen Reaktionsvorgang muss das Tauchbad dabei in einem definierten Temperaturbereich gehalten werden. Die Temperatur innerhalb des Beizbades ist abhängig von der zeitlichen Auslastung. Das heißt, dass das Beizbad bei geringer Aluminiumzufuhr erwärmt oder bei sehr hoher Aluminiumzufuhr aufgrund der erhöhten exothermen Reaktion auch gekühlt werden muss, um im optimalen Temperaturbereich gehalten zu werden.

Durch den Einsatz von Natronlauge werden die Oxide und Oxidhydrate folgendermaßen umgesetzt:

AlO(OH) + NaOH ↔ NaAlO₂ + H₂O

AlO(OH) + NaOH + H₂O ↔ Na[Al(OH)₄]

Al(OH)₃ + NaOH ↔ Na[Al(OH)₄]

Al₂O₃ + 2 NaOH + 3 H₂0 ↔ 2 Na[Al(OH)₄]

Außerdem greift die Lauge auch das Grundmetall an:

2 Al + 2 H₂O + 2 NaOH → 2 NaAlO₂ + 3 H₂↑

2 Al + 6 H₂O + 2 NaOH → 2 NaAl(OH)₄ +3 H₂↑

Das heißt, dass sich als Reaktionsprodukte Natriumaluminat (NaAl(OH)₄) und Wasserstoff (H₂) bilden. Durch Zusatz von Additiven wie z.B. Nitraten oder Nitriten zu dem Beizmedium kann die Wasserstoffentwicklung gehemmt und der Beizvorgang beschleunigt werden, wodurch das Grundmetall geringer angegriffen wird. Allerdings können durch diese Additive weitere kritische Abfallprodukte wie z.B. Ammoniak entstehen, welche das Abwasser belasten.

Desweiteren kann es in der Wanne zu einer Ablagerung von Aluminiumhydroxid an den Wannenwänden und den Heizelementen kommen, der sogenannten Steinbildung, was das Arbeiten behindern und insbesondere die Effizienz der Heizelemente deutlich beeinträchtigen kann. Der Steinbildung kann durch Zugabe von Komplexbildnern wie Gluconaten oder Phosphonaten entgegengewirkt werden. Allerding sind auch diese Komplexbildner umweltrelevant und können das Abwasser belasten.

Durch den Beizprozess entstehen somit, je nach vorhandener Prozesstechnik, verschiedene Abfallarten, welche unterschiedlich entsorgt beziehungsweise behandelt werden. Die verbrauchte Beize und der angefallene Schlamm müssen als Abfall entsorgt werden, wobei Entsorgungskosten entstehen. Der aus der Beize ausgefallene Schlamm wird gewöhnlich deponiert, was mit weiteren Entsorgungskosten verbunden ist. Zusammen stellen diese Entsorgungskosten einen erheblichen Kostenfaktor bei der Oberflächenbehandlung von Aluminiumsubstraten dar.

Darüber hinaus bewirkt der Angriff der Beize auf die Aluminiumoberfläche zur Erzeugung eines sogenannten E6-Finish einen Materialabtrag von bis zu 100 g/m² oder 30 µm. Der Angriff und Materialabtrag erfolgt dabei nicht nur auf den Außenflächen mit dekorativem Anspruch, sondern auch auf den Innenflächen, die unsichtbar bleiben. In Summe beträgt der Materialabtrag daher bis zu 200 g/m² bzw. 60 µm des Gesamtprofils. Hierbei ist der Beizmittelverbrauch linear von der abgetragenen Menge abhängig. Der Verlust an Beizmittel durch den hervorgerufenen Materialabtrag lässt sich relativ problemlos durch Nachdosieren mit Frischbeize kompensieren. Jedoch steigt durch den sich bildenden Natriumaluminat-Komplex auch die Viskosität der Beize, wodurch der Beizprozess mit der Zeit weniger wirksam wird. Auch fällt bei steigender Aluminiumkonzentration aus dem Beizmedium Aluminiumhydroxid aus, welches sich als schlammartiger Bodensatz in der Beizwanne niederschlägt. Das Beizbad muss deshalb in regelmäßigen Abständen erneuert bzw. ausgetauscht werden. Mit Verfahren gemäß bisherigem Stand der Technik gehen somit ein hohes Aufkommen umweltkritischer Substanzen und ein hoher Energieverbrauch einher.

Dies berücksichtigend ist es die Aufgabe der vorliegenden Erfindung ein Verfahren zur Herstellung von satinierten Oberflächen auf Aluminiumsubstraten anzugeben, welches die aufgeführten Nachteile aus dem Stand der Technik zu überwinden vermag. Insbesondere ist es die Aufgabe der vorliegenden Erfindung ein Verfahren zur Herstellung von satinierten Aluminiumoberflächen bereitzustellen, deren Erscheinungsbild in Wesentlichen identisch zu den durch eine Behandlung gemäß DIN 17611 E6 hergestellten Aluminiumoberflächen ist.

Gelöst wird diese Aufgabe durch ein Verfahren gemäß Anspruch 1 oder durch ein Strahlmittel gemäß Anspruch 12. Ausgestaltung des erfindungsgemäßen Verfahrens finden sich in den Unteransprüchen sowie der nachfolgenden Beschreibung.

Es wird somit ein Verfahren zur Herstellung einer satinierten Oberfläche auf einem Aluminiumsubstrat vorgeschlagen, aufweisend die Verfahrensschritte:
- Bereitstellen eines Aluminiumsubstrates;
- Strahlbehandeln der zu satinierenden Oberflächenbereiche des bereitgestellten Aluminiumsubstrates mit einem Strahlmittel; wobei als Strahlmittel eine Mischung aus kantigen und kugeligen Partikeln mit einem Korndurchmesser D₉₀ ≤ 0,3 mm verwendet wird.

Gemäß einer Ausführungsform wird ein Verfahren zur Herstellung einer satinierten Oberfläche auf einem Aluminiumsubstrat vorgeschlagen, aufweisend die Verfahrensschritte:
- Bereitstellen eines Aluminiumsubstrates;
- Strahlbehandeln der zu satinierenden Oberflächenbereiche des bereitgestellten Aluminiumsubstrates mit einem Strahlmittel;
- Anodisieren der strahlbehandelten Oberflächenbereiche; und
- Verdichten der anodisierten Oberflächenbereiche,
wobei als Strahlmittel eine Mischung aus kantigen und kugeligen Partikeln mit einem Korndurchmesser D₉₀ von ≤ 0,3 mm verwendet wird.

Gemäß einer Ausführungsform wird ein Verfahren zur Herstellung einer satinierten Oberfläche auf einem Aluminiumsubstrat vorgeschlagen, aufweisend die Verfahrensschritte:
- Bereitstellen eines Aluminiumsubstrates;
- Strahlbehandeln der zu satinierenden Oberflächenbereiche des bereitgestellten Aluminiumsubstrates mit einem Strahlmittel;
- Anodisieren der strahlbehandelten Oberflächenbereiche; und
- Verdichten der anodisierten Oberflächenbereiche,
wobei als Strahlmittel eine Mischung aus kantigen und kugeligen Partikeln mit einem Korndurchmesser D₉₀ von ≤ 0,3 mm und ≥ 0.01 mm. Verwendet wird.

Gemäß einer Ausführungsform kann das Strahlmittel so gewählt sein, dass die Mischung kantige und kugelige Partikeln mit einem Korndurchmesser D₉₀ von ≤ 0,3 mm und ≥ 0.01 mm, vorzugsweise von ≤ 0,2 mm bis ≥ 0.01 mm, noch bevorzugter ≤ 0,1 mm bis ≥ 0.01 mm, außerdem bevorzugt ≤ 0,05 mm bis ≥ 0.01 mm und darüber hinaus bevorzugt ≤ 0,02 mm bis ≥ 0.01 mm, aufweist.

Der Begriff "Partikeldurchmesser" sowie "Korndurchmesser", wie in der vorliegenden Beschreibung verwendet, wenn nicht anders angegeben, bezieht sich auf einen Partikeldurchmesser sowie Korndurchmesser D₉₀, d.h. mindestens 90% der gesamten Partikel-Zusammensetzung bzw. der gesamten Körner-Zusammensetzung weisen den angegeben Partikel- bzw. Korndurchmesser auf.

Die jeweiligen Anteile der an kantigen und runden Partikel, angegeben in Gew.-%, sind so gewählt, dass die Gesamtzusammensetzung an kantigen und runden Partikeln 100 Gew.-% nicht übersteigt.

Gemäß einer Ausführungsform kann das Strahlmittel so gewählt sein, dass die Mischung kantige und kugelige Partikeln als Neukorn mit der nachstehenden Partikeldurchmesser-Verteilung aufweist:
> 0,315 mm = < 0,1 %;
≤ 0,315 bis ≥ 0,200 mm = ≤ 5 %;
< 0,200 mm und ≥ 0,050 mm = ≥ 95 %
< 0,050 mm = < 0,1 %, bezogen auf die gesamte Strahlmittelmischung.

Erfindungsgemäß kann es in einer Ausgestaltung des Verfahrens vorgesehen sein, dass die Strahlmittelpartikelmischung vor dem Aufbringen auf die Substratoberfläche gesiebt und/oder gesichtet wird, um die Abwesenheit von Partikeln oberhalb und/oder unterhalb des erfindungsgemäß vorgesehenen Partikeldurchmessers sicher zu stellen.

Überraschender Weise hat sich gezeigt, dass bei einer mechanischen Behandlung der Aluminiumoberfläche und einer anschließenden Anodisierung und Verdichtung dieses eine Finish, vorzugsweise E6-Finish, erzielt werden kann, welches ein im Wesentlichen oder sogar identisches Erscheinungsbild aufweist, wie entsprechend beizbehandelte Aluminiumoberflächen. Durch den Verzicht auf Beizen werden die umweltkritischen Abfallprodukte vorteilhaft vermieden. Darüber hinaus entfällt ein Temperieren der Beizbäder, wodurch ein wesentlicher Teil der bei der Aluminiumoberflächenbehandlung aufzuwendenden Energie eingespart werden kann. Letztendlich werden bei der erfindungsgemäßen mechanischen Oberflächenbehandlung lediglich die Oberflächenbereiche des Aluminiumsubstrates behandelt, welche letztendlich sichtbar sind. Nicht sichtbare Bereiche, wie beispielsweise die Innenseite von Hohlprofilen werden im Gegensatz zu der Beizbehandlung gemäß Stand der Technik nicht behandelt, wodurch sich der Materialabtrag bezogen auf das Gesamtprofil wesentlich reduziert. Hierdurch sind Materialeinsparungen am Aluminiumsubstrat möglich. Insbesondere hat sich gezeigt, dass Strukturfehler im Aluminiumsubstrat, wie beispielsweise Stegabzeichnungen oder Schweißnähte, mittels der erfindungsgemäßen Strahlbehandlung wesentlich besser entfernt werden können, als dies mit einem chemischen Verfahren, wie einer Beizbehandlung bisher möglich war. Dies gilt auch für massivere Oberflächendefekte wie Pressriefen oder Kratzer.

Darüber hinaus hat die erfindungsgemäße Strahlbehandlung eine deutlich höhere Umweltverträglichkeit im Vergleich zu den chemischen Oberflächenbehandlungsverfahren.

Der Begriff Partikel und Korn bzw. Körner werden in der Beschreibung synonym verwendet.

Die Begriffe "kugelförmig", "kugelig" im Zusammenhang mit Partikeln und Körnern, im Sinne dieser Erfindung bedeüten, dass die Partikel und Körner im Wesentlichen rund sind, d.h. deren Länge ist kleiner als das Zweifache ihres Durchmessers.

Der Begriff "kantig" im Zusammenhang mit Partikeln und Körnern, im Sinne dieser Erfindung bedeuten, dass die Partikel und Körner nicht kugelförmig sind, Kanten aufweisen und gebrochene Kanten scharfe Kanten aufweisen.

Alle physikalischen Angaben betreffend die erfindungsgemäßen Partikel beziehen sich auf ein sogenanntes "Neukorn", wenn nicht anders angegeben.

Der Begriff "Neukorn" im Zusammenhang mit der vorliegenden Erfindung betrifft Körner bzw. Partikel vor dem Strahlmitteleinsatz.

Der Begriff "Betriebszustand" im Zusammenhang mit der vorliegenden Erfindung betrifft Partikel beim Strahlmitteleinsatz, die in einer Strahlmittelmaschine zum Strahlen auf ein Aluminiumbauteil abgeworfen worden sind und darin zirkulieren.

Anforderungen an Strahlmittel im Allgemeinen sind in den Normen DIN 8201; DIN ISO 11124 und SAE J 444 geregelt, auf die hier in vollem Umfang Bezug genommen wird.

Erfindungsgemäß verwendbare Strahlmittel aus kantigem und kugeligem Korn können aber auch Siebanalysen aufweisen, die außerhalb der vorstehenden Normen liegen.

Das Aufbringen der Strahlmittelpartikelmischung auf die Aluminiumsubstratoberfläche kann erfindungsgemäß sowohl mittels Druckluft, als auch mittels Schleuderradtechnik erfolgen. Während bei der Aufbringung der Strahlmittelpartikelmischung auf die Aluminiumsubstratoberfläche mittels Druckluft die Strahlmittelpartikel durch einen Druckluftstrahl mitgerissen und auf die Substratoberfläche beschleunigt werden, werden bei der Schleuderradtechnik die Strahlmittelpartikel durch ein sich schnell drehendes Schaufelrad auf die gewünschte Geschwindigkeit beschleunigt. Es ist auch möglich die Strahlmittelpartikelmischung in Verbindung mit beispielsweise wässrigen Suspensionen einzusetzen. Diese Aufbringung der Strahlmittelpartikelmischung mittels Nassstrahlverfahren mit Wasserdruck und Düse oder mittels Schleuderrat wird für diese Profilbearbeitung eher selten eingesetzt. Hierdurch kann beispielsweise eine mögliche Staubbildung bei der Strahlbehandlung verringert werden.

Die Verwendung von kantigen Partikeln bei der Strahlbehandlung von Aluminiumoberflächen führt nicht zu der gewünschten E6 Oberflächengüte. Vielmehr kommt es durch die Verwendung von kantigen Partikeln zu einer eher rauen Oberfläche. Die Oberfläche bleibt aufgrund der Vorbehandlung mit kantigen Partikeln eher rau. Es wird auch nicht annähernd eine Aluminiumoberfläche mit der gewünschten E6 Oberflächengüte erhalten. Die Verwendung von kugeligen Partikeln führt nicht zu einer Entfernung von Pressriefen bzw. der gewünschten E6 Oberflächengüte von Aluminium. Auch die Verwendung von kugeligen Partikeln im ersten Behandlungsschritt und der Verwendung von kantigen Partikeln in einem nachfolgenden zweiten Schritt führt ebenfalls nicht annähernd zu einer Aluminiumoberfläche mit der gewünschten E6 Oberflächengüte. Vielmehr wird eine deutlich rauere Oberfläche als bei der zuvor genannten Behandlungsabfolge erreicht. Dagegen führt eine spezielle Abmischung von kantigen und kugeligen Partikeln überraschender Weise, und zwar ohne chemische Behandlung, zu der gewünschten Aluminium E6 Oberflächengüte.

Ohne an diese Theorie gebunden zu sein wird davon ausgegangen, dass die in der Strahlmittelpartikelmischung enthaltenen kantigen Partikel eine abrasive Wirkung auf die Substratoberfläche ausüben, durch welche die natürliche Oxidschicht auf dem Substrat sowie etwaige Verunreinigungen abgetragen werden, während die kugeligen Partikel eine Oberflächenverdichtende Wirkung ausüben.

Durch die Verwendung der erfindungsgemäßen Strahlmittelpartikelmischung wird sozusagen ein "Satinieren" der Oberfläche von Aluminium erreicht.

Gemäß einer Ausführungsform kann mittels der erfindungsgemäßen Strahlmittelpartikelmischung eine mit dem chemischen E6-Beizangriff im Höchstmaße ähnliche Oberflächenstruktur und -erscheinung erreicht. Mit anderen Worten, es kann mittels der erfindungsgemäßen Verwendung der Strahlmittelpartikelmischung eine Aluminiumoberflächengüte, die der E6 Oberflächengüte entspricht, erreicht werden.

Das Aufbringen der Strahlmittelpartikelmischung kann in überraschender Weise nicht nur mittels Strahlautomaten erfolgen, die ein sehr gleichmäßiges Aufbringen gewährleisten, sondern auch handgeführt, ohne das es unmittelbar zur Ausbildung von isotropen, richtungsabhängigen Oberflächenstrukturen kommt. Die erfindungsgemäß erzeugten Oberflächenstrukturen können demgegenüber anisotrop sein.

Gemäß einer Ausführungsform weist die Neukorn-Strahlmittelpartikelmischung einen Anteil an kantigen Neukorn-Partikeln von zwischen ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Gew.-% ± 2% Gew.-%, bezogen auf das Gesamtgewicht der Neukorn-Strahlmittelpartikelmischung, auf.

Gemäß einer Ausführungsform weist die Neukorn-Strahlmittelpartikelmischung einen Anteil an runden Neukorn-Partikeln von zwischen ≥ 20 Gew.-% und ≤ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Gew.-% ± 2% Gew.-%, bezogen auf das Gesamtgewicht der Neukorn-Strahlmittelpartikelmischung, auf.

Gemäß einer Ausführungsform weist die Neukorn-Strahlmittelpartikelmischung einen Anteil an kantigen Neukorn-Partikeln von zwischen ≤ 80 Gew.-% und ≥ 20 Gew.-%, vorzugsweise zwischen < 70 Gew.-% und ≥ 30 Gew.-%, weiter bevorzugt ≤ 60 Gew.-% und ≥ 40 Gew.-%, insbesondere 50 Ges.-% ± 2% Gew.-% und runden Partikeln auf, wobei der Gesamtgewichtsanteil der Strahlmittelpartikelmischung aus kantigen und kugeligen Neukorn-Partikeln 100 Gew.-% ausmacht.

Gemäß einer Ausführungsform weist die Neukorn-Strahlmittelpartikelmischung:
a) einen Anteil an kantigen Neukorn-Partikeln von zwischen ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Gew.-% ± 2% Gew.-%: und/oder
b) einen Anteil an runden Neukorn-Partikeln von zwischen ≥ 20 Gew.-% und ≤ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Gew.-% ± 2% Gew.-%;
bezogen auf das Gesamtgewicht der Neukorn-Strahlmittelpartikelmischung, auf, wobei die Gesamtzusammensetzung an kantigen und runden Neukornpartikeln 100 Gew.-% ausmacht.

Gemäß einer weiteren Ausführungsform weist die Neukorn-Strahlmittelpartikelmischung einen Anteil an kantigen Neukorn-Partikeln und kugeligen Neukorn-Partikeln von jeweils 50 Gew.-%, bezogen auf das Gesamtgewicht der Strahlmittelpartikelmischung, auf, wobei gegebenenfalls der jeweilige Anteil an kantigen Neukorn-Partikeln und kugeligen Neukorn-Partikeln mit einer Abweichung von ± 2 Gew.-% enthalten sein kann.

Gemäß einer bevorzugten Ausgestaltung der Erfindung weist die Strahlmittelpartikelmischung im Betriebszustand einen durchschnittlichen Anteil an kantigen Partikeln zwischen ≤ 80 Gew.-% und ≥ 20 Gew.-%, vorzugsweise zwischen ≤ 70 Gew.-% und ≥ 30 Gew.-%, weiter bevorzugt ≤ 60 Gew.% und ≥ 40 Gew.-%, insbesondere 50 Gew.-% ± 2% Gew.-%, auf.

Der Begriff "Betriebszustand" ist dabei so zu verstehen, dass es sich um die durchschnittliche Zusammensetzung des Strahlmittels während des Strahlvorganges handelt.

Gemäß einer weiteren Ausführungsform weist die Strahlmittelpartikelmischung im Betriebszustand einen durchschnittlichen Anteil an kantigen Partikeln zwischen < 75 Gew.-% und ≥ 35 Gew.-%, vorzugsweise zwischen ≤ 70 Gew.-% und ≥ 45 Gew.-% auf, bezogen auf die Gesamtzusammensetzung der Strahlmittelpartikelmischung.

Die im erfindungsgemäßen Verfahren eingesetzte Strahlmittelpartikelmischung unterliegt einem gewissen Verschleiß. Insbesondere der Anteil der kantigen Strahlmittelpartikel nutzt sich im Laufe der Verwendung ab. Es kann daher erfindungsgemäß vorgesehen sein, dass die Strahlmittelpartikelmischung im Lauf der Benutzung ergänzt wird, um ihre Effizienz aufrecht zu erhalten. Dabei kann es insbesondere vorgesehen sein, dass die Strahlmittelpartikelmischung kontinuierlich oder diskontinuierlich mit einer Strahlmittelpartikelmischung ergänzt wird, welche einen Anteil an kantigen Partikeln zwischen ≤ 80 Gew.-% und ≥ 50 Gew.-%, insbesondere 75 Gew.-% ± 2 Gew.-% aufweist, und einem Anteil an kugeligen Partikeln, wobei der Gesamtgewichtsanteil der Strahlmittelpartikelmischung aus kantigen und runden Partikeln 100 Gew.-% ausmacht.

Gemäß einer weiteren Ausführungsform weist die Strahlmittelpartikelmischung im Betriebszustand einen durchschnittlichen Anteil an kantigen Partikeln von zwischen ≤ 80 Gew.-% und ≥ 35 Gew.-%, vorzugsweise zwischen ≤ 70 Gew.-% und ≥ 45 Gew.-%, insbesondere 50 Gew.-.% ± 2% Gew.-% und runden Partikeln, wobei der Gesamtgewichtsanteil der Strahlmittelpartikelmischung aus kantigen und kugeligen Partikeln 100 Gew.-% ausmacht.

Gemäß einer weiteren Ausführungsform weist die Strahlmittelpartikelmischung im Betriebszustand einen durchschnittlichen Anteil an kantigen Partikeln und kugeligen Partikeln von jeweils 50 Gew.-%, bezogen auf das Gesamtgewicht der Strahlmittelpartikelmischung, auf, wobei gegebenenfalls der jeweilige Anteil an kantigen Neukorn-Partikeln und kugeligen Neukorn-Partikeln mit einer Abweichung von ± 2 Gew.-% enthalten sein kann.

Gemäß einer Ausführungsform weist die Strahlmittelpartikelmischung im Betriebszustand einen durchschnittlichen Anteil an kugeligen-Partikeln von zwischen ≥ 20 Gew.-% und ≤ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Ges.-% ± 2% Gew.-%, bezogen auf das Gesamtgewicht der Neukorn-Strahlmittelpartikelmischung, auf.

Gemäß einer Ausführungsform kann die Strahlmittelpartikelmischung im Betriebszustand einen durchschnittlichen Anteil:
a) an kantigen Partikeln von ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Ges.-% ± 2% Gew.-%; und/oder
b) an kugeligen Partikeln von zwischen ≥ 20 Gew.-% und ≤ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Gew.-% ± 2% Gew.-%, aufweisen,
bezogen auf das Gesamtgewicht der Strahlmittelpartikelmischung im Betriebszustand.

Durch entsprechende kontinuierliche oder diskontinuierliche Zugabe kann die durchschnittliche Strahlmittelpartikelmischung während des Betriebszustandes aufrecht erhalten werden.

Gemäß einer weiteren Ausführungsform können der Strahlmittelmischung während des Betriebszustands Neukorn-Strahlmittel mit einem Anteil an kantigen Partikeln und kugeligen Partikeln von jeweils 50 Gew.-% mit einer Abweichung von ± 2 Gew.-%, bezogen auf das Gesamtgewicht der Strahlmittelpartikelmischung zugegeben werden, wobei das Gesamtgewicht aus kantigen und kugeligen Partikeln 100 Gew.-% ausmacht.

Gemäß einer weiteren Ausführungsform können der Strahlmittelmischung während des Betriebszustands Neukorn-Strahlmittel mit einem Anteil an kantigen Partikeln von 70 Gew.-% ± 2 Gew.-% und kugeligen Partikeln von 30 Gew.-% ± 2 Gew.-%, bezogen auf das Gesamtgewicht der Strahlmittelpartikelmischung zugegeben werden, wobei das Gesamtgewicht aus kantigen und kugeligen Partikeln 100 Gew.-% ausmacht.

Kugelige Partikel haben in der Regel eine höhere Lebensdauer als kantige Partikel. Kantige Partikel haben die Tendenz während des Betriebszustandes zu brechen, hingegen sind die kugeligen Partikel aus einem viel duktileren Material und habe folglich eine deutlich geringere Tendenz zu brechen.

Es können somit höhere Anteile an kantigen Partikeln, gegenüber kugeligen Partikeln während des Betriebszustandes zugesetzt werden, um die durchschnittliche Strahlmittelpartikelmischung während des Betriebszustandes aufrecht zu erhalten

In diesem Zusammenhang wird daraufhingewiesen, dass Partikel mit einem Durchmesser von < 0.01 mm, auch als Staub bezeichnet, nicht mehr als Strahlmittelpartikel im Sinne dieser Erfindung verstanden werden, so dass sämtliche Gewichts-%-Angaben Partikel mit einem Durchmesser von < 0.01 mm nicht mit einschließen.

Gemäß einer weiteren Ausgestaltung des erfindungsgemäßen Verfahrens weisen die kantigen Partikel eine durchschnittliche Härte von ≥ 600 HV, insbesondere ≥ 640 HV, vorzugsweise ≥ 750 HV und bevorzugt ≥ 600 HV und ≤ 800 HV auf.

Kantige Partikel mit einer Härte im Bereich von ≥ 600 HV und ≤ 800 HV sind beispielsweise unter der Marke Grittal® der Firma Vulkan-Inox im Handel erhältlich.

Es hat sich gezeigt, dass kantige Strahlmittelpartikel in diesem Härtebereich in Kombination mit den kugeligen Partikeln eine optimierte Abtragung der Oberfläche zur Erzeugung des gewünschten Satin-Effektes auf der Aluminiumoberfläche erreichen. Insbesondere kann es sich bei den kantigen Strahlmittelpartikeln um Eisen basierte Metalllegierungen handeln, vorzugsweise um Eisen basierte Metalllegierungen die eine martensitische Matrix mit Chromcarbiden aufweisen und bevorzugt um Edelstahlpartikel, insbesondere rostfreie Edelstähle, handeln. Bevorzugt weist der Edelstahl dabei Chromcarbide auf. Weiter bevorzugt weist der Edelstahl einen Chromanteil von 30 Gew.-% ± 2 Gew.-% sowie einen Kohlenstoffanteil von 2 Ges.-% ± 0,5 Gew.-% auf. Besonders bevorzugt können die kantigen Partikel aus einem Chromcarbid haltigen Edelstahl bestehen.

Gemäß einer weiteren Ausgestaltung des erfindungsgemäßen Verfahrens weisen die kugeligen Partikel eine durchschnittliche Härte von ≥250 HV, vorzugsweise ≥ 280 HV, bevorzugt ≥ 300 HV, weiter bevorzugt ≥ 350 HV, noch weiter bevorzugt von ≥ 400 HV und außerdem bevorzugt von ≥ 450 HV auf. Gemäß einer weiteren Ausführungsform weisen die kugeligen Partikel eine durchschnittliche Härte von ≥ 250 HV und ≤ 500 HV auf.

Kugelige Partikel mit einer Härte im Bereich von ≥ 250 HV und ≤ 500 HV sind beispielsweise unter der Marke Chronital® der Firma Vulkan-Inox im Handel erhältlich.

Es können aber auch kugelige Partikel mit einer Härte von > 500 HV, beispielsweise ≤ 550 HV, eingesetzt werden.

Es hat sich gezeigt, dass kugelige Strahlmittelpartikel in diesem Härtebereich eine optimierte Verdichtung der Oberfläche zur Erzeugung des gewünschten Satin-Effektes in Kombination mit den kantigen Partikeln auf der Aluminiumoberfläche erzeugen. Insbesondere kann es sich bei den kugeligen Strahlmittelpartikeln um Eisen basierte Metalllegierungen, vorzugsweise um Edelstahlpartikel handeln. Bevorzugt weist der Edelstahl dabei eine austenitische Mikrostruktur auf. Weiter bevorzugt weist der Edelstahl einen Chromanteil von 18 Gew.-% ± 2 Gew.-% sowie einen Nickelanteil von 10 Gew.-% ± 2 Gew.-% auf

Gemäß einer weiteren Ausführungsform der vorliegenden Erfindung handelt es sich bei den Edelstahlpartikeln besonders bevorzugt um rostfreien Edelstahl.

Ein weiterer Vorteil des erfindungsgemäßen Verfahrens ist es, dass verbrauchtes Strahlmittel aufgrund seiner Zusammensetzung ohne weiteres der industriellen Verarbeitung, beispielsweise der Stahlproduktion, zugeführt werden kann. Es stellt somit keinen Abfallstoff, sondern vielmehr ein Wirtschaftsgut dar, welches als Zuschlagstoff den stahlproduzierenden Unternehmen angeboten werden kann.

Die Strahlgeschwindigkeit im Strahlprozess, auch "Abwurfgeschwindigkeit genannt" kann im Durchschnitt ≥ 30 m/s bis ≤ 100 m/s, vorzugsweise ≥ 35 m/s bis ≤ 90 m/s, weiter bevorzugt ≥ 40 m/s bis ≤ 80 m/s, noch bevorzugter ≥ 45 m/s bis ≤ 70 m/s, und am meisten bevorzugt ≥ 50 m/s bis ≤ 60. m/s, ausmachen.

Der Druck des Strahls an der Austrittsdüse kann ≥ 2 bar bis ≤ 10 bar, vorzugsweise ≥ 3 bar bis ≤ 8 bar und bevorzugter ≥ 4 bar bis ≤ 6 bar ausmachen. Es kann aber auch mit höheren Drücken gestrahlt werden.

Gemäß einer weiteren Ausgestaltung des erfindungsgemäßen Verfahrens wird die zu satinierende Substratoberfläche nach der Strahlbehandlung und vor dem Anodisieren dekapiert und/oder gebeizt. Hierbei kann vorzugsweise ein saures Dekapier- oder Beizbad eingesetzt werden.

Gemäß einer weiteren Ausgestaltung des erfindungsgemäßen Verfahrens wird die zu satinierende Substratoberfläche nach der Strahlbehandlung und vor dem Anodisieren einer Glanzbehandlung unterworfen. Hierdurch kann der Satin-Effekt in vorteilhafter Weise verstärkt werden. Eine Glanzbehandlung kann dabei beispielsweise mittels einer heißen sauren, vorzugsweise phosphorsäurehaltigen Behandlungslösung erfolgen, mit welcher die strahlbehandelte Aluminiumoberfläche kontaktiert wird. Alternativ kann eine Glanzbehandlung unter Anlegung einer Spannung elektrolytisch in einer Mischung aus Phosphorsäure und Schwefelsäure erfolgen. Darüber hinaus sind alle anderen bekannten Glänzverfahren für Aluminiumoberflächen anwendbar.

Die erfindungsgemäß vorgesehene Anodisierung und Verdichtung der Aluminiumsubstratoberfläche kann in der aus dem Stand der Technik bekannten üblichen Weise erfolgen, wie sie beispielsweise auch in der DIN 17611 beschrieben ist.

Gemäß einer weiteren Ausgestaltung des erfindungsgemäßen Verfahrens kann es vorgesehen sein, dass zwischen den einzelnen Behandlungsschritten Spülschritte vorgesehen sind, um etwaig an der Substratoberfläche anhaftende Verfahrensrückstände zu beseitigen.

Darüber hinaus betrifft die vorliegende Erfindung ein Strahlmittel zur Strahlbehandlung von Aluminiumoberflächen, wobei das Strahlmittel einen Korndurchmesser ≤ 0,3mm, vorzugsweise ≤ 0,2mm, noch bevorzugter ≤ 0,1 mm aufweist, welches dadurch gekennzeichnet ist, dass das Strahlmittel im Betriebszustand einen durchschnittlichen Anteil an kantigen Partikeln zwischen ≤ 90 Gew.-% und ≥ 30 Gew.-%, vorzugsweise zwischen ≤ 75 Gew.-% und ≥ 40 Gew.-%, insbesondere 50 Gew.-% aufweist.

Gemäß einer bevorzugten Ausgestaltung des Strahlmittels weisen die kugeligen Partikel eine durchschnittliche Härte ≥300 HV, vorzugsweise ≥450 HV und die kantigen Partikel eine durchschnittliche Härte ≥640 HV, vorzugsweise ≥750 HV auf.

Besonders bevorzugt weisen dabei die kantigen Partikel einem Chromcarbid haltigen Edelstahl mit einer Martensitstruktur auf oder eine Mikrostruktur aus δ-Ferrit; oder bestehen die kantigen Partikel bestehen aus einem Chromcarbid haltigen Edelstahl mit einer Martensitstruktur oder aus einer Mikrostruktur aus δ-Ferrit

Die Erfindung wird nachfolgend anhand von Figuren und Ausführungsbeispielen näher beschrieben.

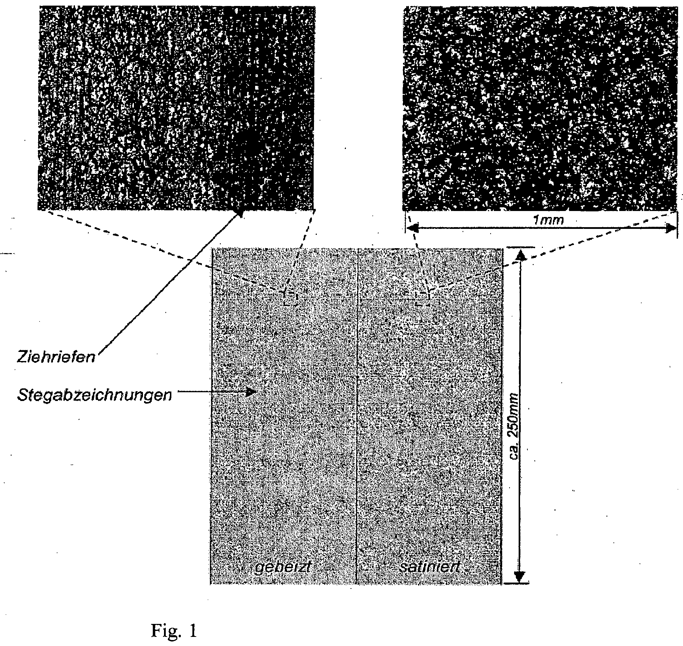

Fig. 1 zeigt dabei in einer Gegenüberstellung die durch beizen gemäß Stand der Technik und erfindungsgemäßer Strahlbehandlung erzeugten Oberflächenstrukturen.

Fig. 1 zeigt in einer Gegenüberstellung die durch beizen gemäß Stand der Technik und erfindungsgemäßer Strahlbehandlung erzeugten Oberflächenstrukturen. Wie die Gegenüberstellung erkennen lässt, unterscheiden sich die erfindungsgemäß strahlbehandelten Aluminiumoberflächen gegenüber den gemäß DIN 17611 E6 beizbehandelten Aluminiumoberflächen sowohl in der Normalansicht, als auch in der mikroskopischen Vergrößerung nur unwesentlich voneinander. Vielmehr zeigt sich, dass die erfindungsgemäß behandelte Substratoberfläche in der Normalansicht keine Stegabzeichnungen mehr erkennen lässt. Erfindungsgemäß strahlbehandelte Substratoberflächen lassen sich ohne weiteres zusammen mittels der bekannten Beizbehandlung behandelten Oberflächen verbauen, ohne dass es zu einer optisch wahrnehmbaren Unterscheidung der Oberflächen kommt.

### Beispiel 1

Profilabschnitte von extrudierten Aluminiumprofilen der Legierung AlMgSiO₃ wurden in einem Presswerk für vergleichende Versuche entnommen. Von Strahlmitteln eines deutschen Herstellers wurden Siebfraktionen der Siebgrößen D₉₀ von 0,1 mm bis 0,2 mm Maschenweite sowohl von kantigem Material als auch von kugeligem Material hergestellt. Bei dem rundenStrahlmittel handelte es sich um Edelstahl mit einem Chromanteil von Gew.-18% ± 1 Gew.-% sowie einem Nickelanteil von 10 Gew.-% ± 2 Gew.-%. Bei dem kantigen Strahlmittel handelte es sich um Edelstahl mit einem Chromanteil von Gew.-30% ± 1 Gew.-% und Kohlenstoffabteil von 2 Gew.-% ± 0,1. Anschließend wurden die vorbereiteten Profilabschnitte in einer Handkabine mit variablem Pressluftdruck gestrahlt, wobei auch Mischungen der kugeligen und kantigen Siebfraktionen eingesetzt wurden.

Nach dem Strahlen wurden die Profilabschnitte zunächst in einem Reiniger für Aluminiumoberflächen der Firma ALUFINISH, Produkt ALFICLEAN gereinigt, danach eine Minute in einer verdünnten Natronlauge (50g/l bei 60° C) leicht gebeizt, dann in einer sauren Lösung aus 150g/l Schwefelsäure und einem peroxidischen Additiv (ALFIDEOX der Firma ALUFINISH; 1g/l) dekapiert und danach in einem Bad mit 180g/l Schwefelsäure anodisiert. Dabei wurde eine Stromdichte von 1,5 A/dm angewendet; die Anodisierzeit betrug 40 Minuten bis eine Schichtdicke von 20 µm erreicht war. Zwischen den vorgenannten Behandlungsschritten wurden die Profilabschnitte jeweils gespült und auch nach dem Anodisieren erfolgte ein Spülvorgang von zumindest je einer Minute in Leitungswasser. Danach wurden die erzeugten Oxidschichten in heißem Wasser von 96° C bis 98 °C für 1 Stunde verdichtet, wobei dem Wasser ein sogenanntes Verdichtungshilfsmittel der Firma ALUFINISH, Produkt ALFISEAL in einer Konzentration von 2g/l beigefügt war. Anschließend wurden die Profilabschnitte einer vergleichenden Beurteilung unterzogen.

Zusätzlich wurden einige gestrahlte Profilabschnitte nach dem vorgenannten Reinigen und Beizen anstelle des vorgenannten Dekapierens in einer Lösung aus 75% Schwefelsäure, 15% Phosphorsäure und 10% Wasser bei einer Temperatur von > 100° C für eine Minute geglänzt und danach wie beschrieben ebenfalls anodisiert. Die Ergebnisse der Auswertungen sind nachfolgend kurz beschrieben:
Beispiel 1a: Bei den mit den kugeligen Strahlmittelpartikeln behandelten Profilabschnitten waren die Stegabzeichnungen und Schweißnähte auf den Oberflächen noch durchweg sichtbar und nicht überdeckt.
Beispiel 1b: Bei den mit kantigen Strahlmittelpartikeln behandelten Profilabschnitten zeigte sich nach dem Anodisieren durchweg ein dekorativ störender weißlicher Belag; das Oberflächenfinish von zeitlich später behandelten Oberflächen mit den gleichen Strahlmittelpartikeln war signifikant abweichend von den ersten Versuchen mit noch frischen Strahlmittelpartikeln. Die Überdeckung von Stegabzeichnungen und Schweißnähten war deutlich verringert.
Beispiel 2: Mischungen der kugeligen und kantigen Strahlmittelpartikel im Bereich von 30 % kugeligem, Material und 70% kantigem Material und 30% kantigen und 70% kugeligen Strahlmittelpartikeln ergaben ein deutlich dekorativeres Oberflächenfinish und sowohl die Stegabzeichnungen als auch die Schweißnähte waren weitestgehend überdeckt. Zudem war das Oberflächenfinish bei mehreren Wiederholungsversuchen jeweils reproduzierbar.
Beispiel 3: Bei den anstelle des Dekapierens einer Glänzbehandlung unterzogenen Profilabschnitten zeigten die mit der Mischung aus kugeligem und kantigen Strahlmittel behandelten Oberflächen ein attraktives glänzendes satinartiges Finish.
Beispiel 4: Mit einigen unterschiedlichen Strahlmittelpartikelmischungen wurden die Versuche in einer sog. Schleuderrad-Anlage wiederholt. Es zeigte sich das gleiche Oberflächenfinish, wie es in der Handkabine mit Pressluft, auch bei Variation des Druckes, erzielt worden war.

### Beispiel 5:

Es wurden kantige Neukornpartikel, beispielsweise der Marke Grittal® erhältlich bei der Firma Vulkan Inox GmbH, mit einem Korndurchmesser D₉₀ im Bereich von 0,1 mm bis 0,2 mm und einer durchschnittlichen Härte von 750 HV als Strahlmittel eingesetzt. Als kugelige Neukornpartikeln wurden Partikel mit einem Korndurchmesser D₉₀ im Bereich von 0,1 mm bis 0,2 mm und einer durchschnittlichen Härte von 450 HV als Strahlmittel eingesetzt. Kugelige Neukornpartikel mit einer durchschnittlichen Härte von 450 HV können beispielsweise mit Partikeln der Marke Chronital®, erhältlich bei der Firma Vulkan Inox GmbH, erhalten werden, indem die kugeligen Körner vorab in einer Maschine vorarrondiert werden bzw. verfestigt werden, so dass das kugelige Versuchsmaterial eine Härte von 450 HV aufweist. Die kantigen und kugeligen Neukornpartikel wurden, wie in der Tabelle 2 angegeben, gemischt.

Das jeweilige Strahlmittelgemisch, siehe Tabelle 2, wurde in eine Druckstrahlkabine Typ Normfinish, Hersteller Leering Hengelo BV, der Anlagenbaureihe DP 14 mit kontinuierlicher Strahlmittelreinigung zur Behandlung eines stranggepressten Aluminiumstandartfensterrahmenprofiles, beispielsweise ALMG SI 0.5, unter den nachstehenden Bedingungen, abgeworfen.

Die Ergebnisse sind in der Tabelle 2 wiedergegeben.
- Siebfraktion D₉₀: <: 0,2 mm und > 0,1 mm
- Düsendurchmesser :: 10 mm
- Strahldruck: 2: bar
- Abstand Düse zum Strahlgut:: 300 mm
- Strahlwinkel:: 80°
- Strahlmittelabwurfmenge:: 7,2 kg / min. = 432 kg / h
- Strahlgeschwindigkeit: 1 m/min

**Tabelle 2**

| Versuch | Strahlmittel jeweils Siebfraktion D₉₀ < 0,2 mm und > 0,1 mm kantig | Strahlmittel jeweils Siebfraktion D₉₀ < 0,2 mm und > 0,1 mm kugelig | Finish-Beurteilung stranggepresster Aluminiumstandartfensterrahmenprofile ALMG SI 0.5 | Bewertung |
|---|---|---|---|---|
| 1 | 0 | 100 | Pressriefen teilweise nicht überdeckt; Schweißnähte noch glänzender als Finish der Aluminiumoberfläche; Stegabzeichnungen sichtbar; | -- |
| 2 | 20 | 80 | Pressriefen teilweise nicht überdeckt; Schweißnähte und Stegabzeichnungen fast nicht mehr sichtbar; | -/+ |
| 3 | 30 | 70 | Pressriefen überwiegend überdeckt; Schweißnähte und Stegabzeichnungen nicht mehr sichtbar; | + |
| 4 | 40 | 60 | Pressriefen vollständig überdeckt; Schweißnähte und Stegabzeichnungen nicht sichtbar; sehr einheitliches Finish; glatte Aluminiumoberfläche; praktisch E6 Finish; | ++ |
| 5 | 50 | 50 | Pressriefen vollständig überdeckt; | +++ |
| | | | Schweißnähte und Stegabzeichnungen nicht sichtbar; E6-Finish; | |
| 6 | 60 | 40 | Pressriefen vollständig überdeckt; Schweißnähte und Stegabzeichnungen nicht sichtbar; sehr einheitliches Finish ähnlich zu Punkt 4; glatte Aluminiumoberfläche; praktisch E6 Finish; | ++ |
| 7 | 70 | 30 | Pressriefen vollständig überdeckt; Schweißnähte und Stegabzeichnungen nicht sichtbar; Finish ist matter im Vergleich zu Punkt 4 und 6; | + |
| 8 | 80 | 20 | Pressriefen, Schweißnähte und Stegabzeichnungen nicht sichtbar, aber matte und raue Oberfläche; Bei schräger Aufsicht ergibt sich ein weißliches Finish; | -/+ |
| 9 | 100 | 0 | Pressriefen, Schweißnähte und Stegabzeichnungen nicht sichtbar, Oberfläche ist matter und noch rauer als bei Punkt 8; Bei schräger Aufsicht ergibt sich ein weißliches Finish | - |

| | | | | |
|---|---|---|---|---|
| Bewertung: +++ = sehr gut entspricht E6 Finish ++ = gut entspricht praktisch E6 Finish + = befriedigend, besser als E5 Finish -/+ = etwas besser als E5 Finish - = ausreichend, E5 Finish und schlechter -- = ungenügend | | | | |

## Patentansprüche

1. Verfahren zur Herstellung einer satinierten Oberfläche auf einem Aluminiumsubstrat, aufweisend die Verfahrensschritte:
- Bereitstellen eines Aluminiumsubstrates;
- Strahlbehandeln der zu satinierenden Oberflächenbereiche des bereitgestellten Aluminiumsubstrates mit einem Strahlmittel;
**dadurch gekennzeichnet, dass** als Strahlmittel eine Mischung aus kantigen und kugeligen Partikeln mit einem Korndurchmesser D₉₀ ≤ 0,3 mm verwendet wird.

2. Verfahren nach Anspruch 1, wobei die Neukorn-Strahlmittelpartikelmischung:
a) einen Anteil an kantigen Neukorn-Partikeln von zwischen ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Gew.-% ± 2% Gew.-%: und/oder
b) einen Anteil an runden Neukorn-Partikeln von zwischen ≥ 20 Gew.-% und ≤ 80 Gew.-%, vorzugsweise zwischen ≥ 30 Gew.-% und ≥ 70 Gew.-%, weiter bevorzugt ≥ 40 Gew.-% und ≤ 60 Gew.-%, insbesondere 50 Ges.-% ± 2% Gew.-%;
bezogen auf das Gesamtgewicht der Neukorn-Strahlmittelpartikelmischung, aufweist, wobei die Gesamtzusammensetzung an kantigen und runden Neukornpartikeln 100 Gew.-% ausmacht.

3. Verfahren nach Anspruch 1 oder 2, wobei als Strahlmittel eine Mischung aus kantigen und kugeligen Partikeln mit einem Korndurchmesser D₉₀ von ≤ 0,3 mm und ≥ 0.01 mm, vorzugsweise von ≤ 0,2 mm bis ≥ 0.01 mm, noch bevorzugter ≤ 0,1 mm bis ≥ 0.01 mm, außerdem bevorzugt ≤+ 0,05 mm bis ≥ 0.01 mm und darüber hinaus bevorzugt ≤ 0,02 mm bis ≥ 0.01 mm verwendet wird.

4. Verfahren nach einem der vorhergehenden Ansprüche, wobei das Verfahren die nachfolgenden Verfahrensschritte umfasst:
- Anodisieren der strahlbehandelten Oberflächenbereiche; und
- Verdichten der zu anodisierenden Oberflächenbereiche.

5. Verfahren nach einem der vorhergehenden Ansprüche, wobei die kugeligen Partikel eine durchschnittliche Härte von ≥250 HV und ≤ 500 HV, vorzugsweise ≥ 280 HV, bevorzugt ≥ 300 HV, weiter bevorzugt ≥ 350 HV, noch weiter bevorzugt von ≥ 400 HV und außerdem bevorzugt von ≥450 HV und weiterhin bevorzugt von ≥ 500 HV aufweisen.

6. Verfahren nach einem der vorhergehenden Ansprüche, wobei die kantigen Partikel eine durchschnittliche Härte von ≥ 600 HV, insbesondere ≥ 640 HV, vorzugsweise ≥ 750 HV und bevorzugt ≥ 600 HV und ≤ 800 HV aufweisen.

7. Verfahren nach einem der vorhergehenden Ansprüche, wobei die Strahlmittelpartikelmischung im Betriebszustand einen durchschnittlichen Anteil:
a) an kantigen Partikeln von ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Gew.-% ± 2% Gew.-%; und/oder
b) an kugeligen Partikeln von zwischen ≥ 20 Gew.-% und ≥ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Ges.-% ± 2% Gew.-%, aufweist,
bezogen auf das Gesamtgewicht der Strahlmittelpartikelmischung im Betriebszustand.

8. Verfahren nach einem der vorhergehenden Ansprüche, wobei die Strahlgeschwindigkeit im Strahlprozess im Durchschnitt ≥ 30 m/s bis ≤ 100 m/s, vorzugsweise ≥ 35 m/s bis ≤ 90 m/s, weiter bevorzugt ≥ 40 m/s bis ≤ 80 m/s, noch bevorzugter ≥ 45 m/s bis ≤ 70 m/s, und am meisten bevorzugt ≥ 50 m/s bis ≤ 60 m/s, ausmacht.

9. Verfahren nach einem der vorhergehenden Ansprüche, wobei im Strahlprozess der Druck des Partikel-Strahls an der Austrittsdüse ≥ 2 bar bis ≤ 10 bar, vorzugsweise ≥ 3 bar bis ≤ 8 bar und bevorzugter ≥ 4 bar bis ≤ 6 bar, ausmacht.

10. Verfahren nach einem der vorhergehenden Ansprüche, wobei die zu satinierende Substratoberfläche nach der Strahlbehandlung und vor dem Anodisieren dekapiert und/oder gebeizt wird; und /oder wobei die zu satinierende Substratoberfläche nach der Strahlbehandlung und vor dem Anodisieren einer Glanzbehandlung unterworfen wird.

11. Verfahren nach einem der vorhergehenden Ansprüche, wobei die Strahlbehandlung mittels einer Schleuderradstrahleinrichtung, Injektorstrahleinrichtung und/oder Druckstrahleinrichtung erfolgt.

12. Strahlmittel, geeignet zur Strahlbehandlung von Aluminiumoberflächen nach einem Verfahren der vorherigen Ansprüche, wobei das Strahlmittel eine Mischung aus kantigen und kugeligen Partikeln mit einem Korndurchmesser D₉₀ von ≤ 0,3 mm, insbesondere mit einem Korndurchmesser D₉₀ von ≤ 0,3 mm und ≥ 0.01 mm aufweist.

13. Strahlmittel nach Anspruch 12, wobei die Neukorn-Strahlmittelpartikelmischung:
a) einen Anteil an kantigen Neukorn-Partikeln von zwischen ≤ 80 Gew.-% und ≥ 20 Gew.-%, vorzugsweise zwischen ≤ 70 Gew.-% und ≥ 30 Gew.-%, weiter bevorzugt ≤ 60 Gew.-% und ≥ 40 Gew.-%, insbesondere 50 Gew.-% ± 2% Gew.-%: und/oder
b) einen Anteil an runden Neukorn-Partikeln von zwischen ≥ 20 Gew.-% und ≤ 80 Gew.-%, vorzugsweise zwischen ≥ 30 Gew.-% und ≤ 70 Gew.-%, weiter bevorzugt ≥ 40 Gew.-% und ≤ 60 Gew.-%, insbesondere 50 Gew.-% ± 2% Gew.-%;
bezogen auf das Gesamtgewicht der Neukorn-Strahlmittelpartikelmischung, aufweist, wobei die Gesamtzusammensetzung an kantigen und runden Neukornpartikeln 100 Gew.-% ausmacht.

14. Strahlmittel nach Anspruch 12 oder 13, wobei
a) die kugeligen Partikel eine durchschnittliche Härte von ≥250 HV und ≤ 500 HV, vorzugsweise ≥ 280 HV, bevorzugt ≥ 300 HV, weiter bevorzugt ≥ 350 HV, noch weiter bevorzugt von ≥ 400 HV und außerdem bevorzugt von ≥450 HV und weiterhin bevorzugt von ≥ 500 HV; und/oder
b) die kantigen Partikel eine durchschnittliche Härte von ≥ 600 HV, insbesondere ≥ 640 HV, vorzugsweise ≥ 750 HV und bevorzugt ≥ 600 HV und ≤ 800 HV aufweisen.

15. Strahlmittel nach einem der Ansprüche 12 bis 14, wobei die kantigen und/oder kugeligen Partikel Eisen basierte Metalllegierungen aufweisen, wobei die kantigen Partikel vorzugsweise Eisen basierte Metalllegierungen die eine martensitische Matrix mit Chromcarbiden aufweisen und besonders bevorzugt bestehen die kantigen Partikel aus einem Chromcarbid haltigen Edelstahl und/oder wobei die kugeligen Partikel vorzugsweise aus einem Edelstahl bestehen, und bevorzugt weist der Edelstahl eine austenitische Mikrostruktur auf

## Claims

1. Method for producing a satinized surface on an aluminium substrate, comprising the method steps:
- providing an aluminium substrate;
- treating by blasting with a blasting material the surface regions of the aluminium substrate provided that are to be satinized;
**characterized in that** there is used as the blasting material a mixture of angular and spherical particles having a grain diameter D₉₀ of ≤ 0.3 mm.

2. Method according to Claim 1, wherein the new grain blasting material particle mixture has:
a) a content of angular new grain particles of between ≤ 80% by weight and ≥ 20% by weight, preferably between ≤ 70% by weight and ≥ 30% by weight, more preferably ≤ 60% by weight and ≥ 40% by weight, in particular 50% by weight ± 2% by weight; and/or
b) a content of round new grain particles of between ≥ 20% by weight and ≥ 80% by weight, preferably between ≥ 30% by weight and ≤ 70% by weight, more preferably ≥ 40% by weight and ≤ 60% by weight, in particular 50% by weight ± 2% by weight;
based on the total weight of the new grain blasting material particle mixture, wherein the total composition of angular and round new grain particles is 100% by weight.

3. Method according to Claim 1 or 2, wherein there is used as the blasting material a mixture of angular and spherical particles having a grain diameter D₉₀ of ≤ 0.3 mm and ≥ 0.01 mm, preferably from ≤ 0.2 mm to ≤ 0.01 mm, more preferably from ≤ 0.1 mm to ≥ 0.01 mm, additionally preferably from ≤ 0.05 mm to ≥ 0.01 mm further preferably from ≤ 0.02 mm to ≥ 0.01 mm.

4. Method according to one of the preceding claims, wherein the method comprises the following method steps:
- anodizing the surface regions treated by blasting; and
- sealing the surface regions to be anodized.

5. Method according to one of the preceding claims, wherein the spherical particles have an average hardness of ≥ 250 HV and ≤ 500 HV, preferably ≥ 280 HV, preferably ≥ 300 HV, more preferably ≥ 350 HV, yet more preferably of ≥ 400 HV and additionally preferably of ≥ 450 HV and further preferably of ≥ 500 HV.

6. Method according to one of the preceding claims, wherein the angular particles have an average hardness of ≥ 600 HV, in particular ≥ 640 HV, preferably ≥ 750 HV and preferably ≥ 600 HV and ≤ 800 HV.

7. Method according to one of the preceding claims, wherein the blasting material particle mixture in the operating state has an average content:
a) of angular particles of ≤ 80% by weight and ≥ 20% by weight, preferably between ≤ 70% by weight and ≥ 30% by weight, more preferably ≤ 60% by weight and ≥ 40% by weight, in particular 50% by weight ± 2% by weight; and/or
b) of spherical particles of between ≥ 20% by weight and ≤ 80% by weight, preferably between ≥ 30% by weight and ≤ 70% by weight, more preferably ≤ 40% by weight and ≤ 60% by weight, in particular 50% by weight ± 2% by weight,
based on the total weight of the blasting material particle mixture in the operating state.

8. Method according to one of the preceding claims, wherein the blasting speed in the blasting process is on average from ≤ 30 m/s to ≤ 100 m/s, preferably from ≥ 35 m/s to ≤ 90 m/s, more preferably from ≥ 40 m/s to ≤ 80 m/s, yet more preferably from ≥ 45 m/s to ≤ 70 m/s, and most preferably from ≥ 50 m/s to ≤ 60 m/s.

9. Method according to one of the preceding claims, wherein in the blasting process the pressure of the jet of particles at the outlet nozzle is from ≥ 2 bar to ≤ 10 bar, preferably from ≥ 3 bar to ≤ 8 bar and more preferably from ≥ 4 bar to ≤ 6 bar.

10. Method according to one of the preceding claims, wherein the substrate surface to be satinized is deoxidized and/or pickled after the blast treatment and before anodization; and/or wherein the substrate surface to be satinized is subjected to a polishing treatment after the blast treatment and before anodization.

11. Method according to one of the preceding claims, wherein the blast treatment is carried out by means of a centrifugal wheel blasting device, an injector blasting device and/or a pressure blasting device.

12. Blasting material suitable for the blast treatment of aluminium surfaces by a method of the preceding claims, wherein the blasting material comprises a mixture of angular and spherical particles having a grain diameter D₉₀ of ≤ 0.3 mm, in particular having a grain diameter D₉₀ of ≤ 0.3 mm and ≥ 0.01 mm.

13. Blasting material according to Claim 12, wherein the new grain blasting material particle mixture has:
a) a content of angular new grain particles of between ≤ 80% by weight and ≥ 20% by weight, preferably between ≤ 70% by weight and ≥ 30% by weight, more preferably ≤ 60% by weight and ≥ 40% by weight, in particular 50% by weight ± 2% by weight: and/or
b) a content of round new grain particles of between ≥ 20% by weight and ≤ 80% by weight, preferably between ≥ 30% by weight and ≤ 70% by weight, more preferably ≥ 40% by weight and ≤ 60% by weight, in particular 50% by weight ± 2% by weight;
based on the total weight of the new grain blasting material particle mixture, wherein the total composition of angular and round new grain particles is 100% by weight.

14. Blasting material according to Claim 12 or 13, wherein
a) the spherical particles have an average hardness of ≥ 250 HV and ≤ 500 HV, preferably ≥ 280 HV, preferably ≥ 300 HV, more preferably ≥ 350 HV, yet more preferably of ≤ 400 HV and additionally preferably of ≥ 450 HV and further preferably of ≥ 500 HV; and/or
b) the angular particles have an average hardness of ≥ 600 HV, in particular ≥ 640 HV, preferably ≥ 750 HV and more preferably ≥ 600 HV and ≤ 800 HV.

15. Blasting material according to one of Claims 12 to 14, wherein the angular and/or spherical particles comprise iron-based metal alloys, wherein the angular particles preferably comprise iron-based metal alloys which have a martensitic matrix with chromium carbides and particularly preferably the angular particles consist of a chromium carbide-containing stainless steel, and/or wherein the spherical particles preferably consist of a stainless steel, and preferably the stainless steel has an austenitic microstructure.

## Revendications

1. Procédé de fabrication d'une surface satinée sur un substrat en aluminium, comprenant les étapes de procédé suivantes :
- la préparation d'un substrat en aluminium ;
- le traitement d'abrasion des zones de surface à satiner du substrat en aluminium préparé avec un agent abrasif ;
**caractérisé en ce qu'**un mélange de particules angulaires et sphériques ayant un diamètre de grain D₉₀ ≤ 0,3 mm est utilisé en tant qu'agent abrasif.

2. Procédé selon la revendication 1, dans lequel le mélange de particules de l'agent abrasif à l'état neuf présente :
a) une proportion de particules angulaires à l'état neuf comprise entre ≤ 80 % en poids et ≥ 20 % en poids, de préférence entre ≤ 70 % en poids et ≥ 30 % en poids, de manière davantage préférée entre ≤ 60 % en poids et ≥ 40 % en poids, notamment de 50 % en poids ± 2 % en poids ; et/ou
b) une proportion de particules rondes à l'état neuf comprise entre ≥ 20 % en poids et ≤ 80 % en poids, de préférence entre ≥ 30 % en poids et ≤ 70 % en poids, de manière davantage préférée entre ≥ 40 % en poids et ≤ 60 % en poids, notamment de 50 % en poids ± 2 % en poids ;
par rapport au poids total du mélange de particules de l'agent abrasif à l'état neuf, la composition totale de particules angulaires et rondes étant de 100 % en poids.

3. Procédé selon la revendication 1 ou 2, dans lequel un mélange de particules angulaires et sphériques ayant un diamètre de grain D₉₀ ≤ 0,3 mm et ≥ 0,01 mm, de préférence ≤ 0,2 mm et ≥ 0,01 mm, de manière davantage préférée ≤ 0,1 mm et ≥ 0,01 mm, de manière encore préférée ≤ 0,05 mm et ≥ 0,01 mm, et de manière encore davantage préférée ≤ 0,02 mm et ≥ 0,01 mm, est utilisé en tant qu'agent abrasif.

4. Procédé selon l'une quelconque des revendications précédentes, dans lequel le procédé comprend les étapes de procédé suivantes :
- l'anodisation des zones de surface traitées par abrasion ; et
- la compression des zones de surface à anodiser.

5. Procédé selon l'une quelconque des revendications précédentes, dans lequel les particules sphériques présentent une dureté moyenne ≥ 250 HV et ≤ 500 HV, avantageusement ≥ 280 HV, de préférence ≥ 300 HV, de manière davantage préférée ≥ 350 HV, de manière encore davantage préférée ≥ 400 HV et de manière encore préférée ≥ 450 HV et de manière encore préférée ≥ 500 HV.

6. Procédé selon l'une quelconque des revendications précédentes, dans lequel les particules angulaires présentent une dureté moyenne ≥ 600 HV, notamment ≥ 640 HV, avantageusement ≥ 750 HV et de préférence ≥ 600 HV et ≤ 800 HV.

7. Procédé selon l'une quelconque des revendications précédentes, dans lequel le mélange de particules de l'agent abrasif présente à l'état d'exploitation une proportion moyenne :
a) de particules angulaires ≤ 80 % en poids et ≥ 20 % en poids, de préférence comprise entre ≤ 70 % en poids et ≥ 30 % en poids, de manière davantage préférée entre ≤ 60 % en poids et ≥ 40 % en poids, notamment de 50 % en poids ± 2 % en poids ; et/ou
b) de particules sphériques comprise entre ≥ 20 % en poids et ≤ 80 % en poids, de préférence entre ≥ 30 % en poids et ≤ 70 % en poids, de manière davantage préférée entre ≥ 40 % en poids et ≤ 60 % en poids, notamment de 50 % en poids ± 2 % en poids ;
par rapport au poids total du mélange de particules de l'agent abrasif à l'état d'exploitation.

8. Procédé selon l'une quelconque des revendications précédentes, dans lequel la vitesse d'abrasion lors du procédé d'abrasion est en moyenne de ≥ 30 m/s à ≤ 100 m/s, de préférence de ≥ 35 m/s à ≤ 90 m/s, de manière davantage préférée de ≥ 40 m/s à ≤ 80 m/s, de manière encore davantage préférée de ≥ 45 m/s à ≤ 70 m/s, et de manière préférée entre toutes de ≥ 50 m/s à ≤ 60 m/s.

9. Procédé selon l'une quelconque des revendications précédentes, dans lequel la pression du jet de particules dans la buse de sortie lors du procédé d'abrasion est de ≥ 2 bar à ≤ 10 bar, de préférence de ≥ 3 bar à ≤ 8 bar, et de manière davantage préférée de ≥ 4 bar à ≤ 6 bar.

10. Procédé selon l'une quelconque des revendications précédentes, dans lequel la surface de substrat à satiner est décapée et/ou corrodée après le traitement d'abrasion et avant l'anodisation ; et/ou la surface de substrat à satiner est soumise à un traitement de brillance après le traitement d'abrasion et avant l'anodisation.

11. Procédé selon l'une quelconque des revendications précédentes, dans lequel le traitement d'abrasion a lieu au moyen d'un dispositif d'abrasion à grenaillage, d'un dispositif d'abrasion à injecteur et/ou un dispositif d'abrasion à pression.

12. Agent abrasif, approprié pour le traitement d'abrasion de surfaces en aluminium par un procédé selon les revendications précédentes, dans lequel l'agent d'abrasion comprend un mélange de particules angulaires et sphériques ayant un diamètre de grain D₉₀ ≤ 0,3 mm, notamment un diamètre de grain D₉₀ ≤ 0,3 mm et ≥ 0,01 mm.

13. Agent abrasif selon la revendication 12, dans lequel le mélange de particules de l'agent abrasif à l'état neuf présente :
a) une proportion de particules angulaires à l'état neuf comprise entre ≤ 80 % en poids et ≤ 20 % en poids, de préférence entre ≤ 70 % en poids et ≥ 30 % en poids, de manière davantage préférée entre ≤ 60 % en poids et ≥ 40 % en poids, notamment de 50 % en poids ± 2 % en poids ; et/ou
b) une proportion de particules rondes à l'état neuf comprise entre ≥ 20 % en poids et ≤ 80 % en poids, de préférence entre ≥ 30 % en poids et ≤ 70 % en poids, de manière davantage préférée entre ≥ 40 % en poids et ≤ 60 % en poids, notamment de 50 % en poids ± 2 % en poids ;
par rapport au poids total du mélange de particules de l'agent abrasif à l'état neuf, la composition totale de particules angulaires et rondes étant de 100 % en poids.

14. Agent abrasif selon la revendication 12 ou 13, dans lequel
a) les particules sphériques présentent une dureté moyenne ≥ 250 HV et ≤ 500 HV, avantageusement ≥ 280 HV, de préférence ≥ 300 HV, de manière davantage préférée ≥ 350 HV, de manière encore davantage préférée ≥ 400 HV et de manière encore préférée ≥ 450 HV et de manière encore préférée ≥ 500 HV ; et/ou
b) les particules angulaires présentent une dureté moyenne ≥ 600 HV, notamment ≥ 640 HV, avantageusement ≥ 750 HV et de préférence ≥ 600 HV et ≤ 800 HV.

15. Agent abrasif selon l'une quelconque des revendications 12 à 14, dans lequel les particules angulaires et/ou sphériques comprennent des alliages de métaux à base de fer, les particules angulaires comprenant de préférence des alliages de métaux à base de fer qui présentent une matrice martensitique avec des carbures de chrome, et les particules angulaires étant de manière particulièrement préférée constituées par un acier inoxydable contenant du carbure de chrome, et/ou les particules sphériques étant de préférence constituée par un acier inoxydable, et l'acier inoxydable présentant de préférence une microstructure austénitique.
